# EUROPÄISCHE PATENTSCHRIFT

(11) **EP 2 984 115 B1**
(45) Veröffentlichungstag und Bekanntmachung des Hinweises auf die Patenterteilung: **11.03.2020**
(21) Anmeldenummer: 14719664.6
(22) Anmeldetag: 09.04.2014
(51) Int. Cl.: C08G 18/48, C08G 18/75, C08K 5/00, C08G 18/10, C08K 5/205, C08K 5/3465, C08K 5/548, C09J 175/08

(54) **PRIMERLOSE HAFTUNG VON KLEB- UND DICHTSTOFFEN AUF BASIS VON SILANFUNKTIONELLEN POLYMEREN**
PRIMERLESS ADHESION OF ADHESIVES AND SEALANTS BASED ON SILANE FUNCTIONAL POLYMERS
ADHÉRENCE SANS PRIMAIRE DE SUBSTANCES ADHÉSIVES OU ÉTANCHES À BASE DE POLYMÈRES À SILANES FONCTIONNELS

(30) Priorität: 10.04.2013 EP 13163116
(43) Veröffentlichungstag der Anmeldung: 17.02.2016
(73) Patentinhaber: Sika Technology AG, 6340 Baar (CH)
(72) Erfinder: MENNECKE, Klaas, 79807 Lottstetten (DE); FEDIER, Sara, CH-8305 Dietlikon (CH)
(74) Vertreter: Sika Patent Attorneys
(86) Internationale Anmeldenummer: PCT/EP2014/057170
(87) Internationale Veröffentlichungsnummer: WO 2014/167007

(56) Entgegenhaltungen:
- EP-A1- 2 098 548
- EP-A1- 2 562 223
- DE-A1-102008 021 221
- US-A1- 2005 126 683

## Beschreibung

### Technisches Gebiet

Die vorliegende Erfindung betrifft das Gebiet der elastischen Kleb- und Dichtstoffe sowie der Beschichtungen auf Basis silanfunktioneller Polymere.

### Stand der Technik

Zusammensetzungen auf Basis silanfunktioneller Polymere und deren Verwendung als Klebstoffe, Dichtstoffe oder Beschichtungen sind seit längerem bekannt und vielfach beschrieben. Bekannt ist weiterhin der Einsatz von Mercaptosilanen in derartigen Zusammensetzungen zur Verbesserung der Haftung auf unterschiedlichen Substraten, wodurch das Verkleben, Abdichten oder Beschichten dieser Substrate ohne vorgängige Anwendung eines Primers möglich ist.

So beschreibt beispielsweise EP2098548B1 eine Zusammensetzung umfassend eine Zusammensetzung auf Basis eines silanfunktionellen Polymers, welche 3-Mercaptopropyltrimethoxysilan und ein Organotitanat umfasst und dadurch überlegene Haftung auf porösen Substraten aufweist. Die in EP2098548B1 beschriebene Zusammensetzung weist jedoch in Bezug auf ihre Haftung auf gewissen Substraten, insbesondere auf Kunststoffen wie PVC, Verbesserungspotential auf.

### Darstellung der Erfindung

Aufgabe der vorliegenden Erfindung ist es daher, eine Zusammensetzung auf Basis von silanfunktionellen Polymeren zur Verfügung zu stellen, welche bei primerloser Anwendung eine verbesserte Haftung, insbesondere auf Kunststoffen, bevorzugt auf PVC, aufweist.

Überaschenderweise wurde nun gefunden, dass die Zusammensetzung gemäss Anspruch 1 diese Aufgabe löst.
Durch die Kombination eines Ethoxymercaptosilans mit einem spezifischen Katalysator und einer Base in einer Zusammensetzung auf Basis eines silanfunktionellen Polymers, kann die Haftung einer solchen Zusammensetzung, insbesondere auf Kunststoffen und in besonderem Masse auf PVC, verbessert werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Zusammensetzung umfassend
- mindestens ein silanfunktionelles Polymer **P;**
- mindestens einen Katalysator für die Vernetzung von silanfunktionellen Polymeren, ausgewählt aus der Gruppe bestehend aus einem Organotitanat, Organozirconat und Organoaluminat;
- mindestens eine Base; sowie
- mindestens ein Ethoxymercaptosilan.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar. Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).
Der Begriff "silanfunktionell" bezeichnet Verbindungen, die Silangruppen aufweisen. "Silanfunktionelle Polymere" sind demnach Polymere, welche mindestens eine Silangruppe aufweisen.
Als "Aminosilane" bzw. "Mercaptosilane" werden Organosilane bezeichnet, deren organischer Rest eine Aminogruppe bzw. eine Mercaptogruppe aufweist. Die Begriffe "Organotitanat", "Organozirconat" und "Organoaluminat" bezeichnen im vorliegenden Dokument Verbindungen, welche mindestens einen über ein Sauerstoffatom an das Titan-, Zirconium- bzw. Aluminiumatom gebundenen Liganden aufweisen.
Als "mehrzähniger Ligand" bzw. "Chelatligand" wird im vorliegenden Dokument ein Ligand verstanden, welcher mindestens zwei freie Elektronenpaare besitzt und mindestens zwei Koordinationsstellen des Zentralatoms besetzen kann. Ein zweizähniger Ligand vermag es entsprechend zwei Koordinationsstellen eines Zentralatoms zu besetzen.
Der Begriff "Primer" bezeichnet im vorliegenden Dokument eine dünne Schicht von typischerweise dünner als 1 mm, insbesondere zwischen 1 und 200 µm, bevorzugt zwischen 1 und 100 µm, einer Haftvermittlerzusammensetzung, welche als Voranstrich auf die Oberfläche eines Substrats appliziert wird und zu einer Verbesserung der Haftung der Zusammensetzung auf dem Substrat führt. Entsprechend wird der Begriff "primerlos" für das das Verkleben, Abdichten oder Beschichten von Substraten ohne deren Vorbehandlung mit einem Primer verwendet.
Unter der "Molekulargewicht" versteht man im vorliegenden Dokument stets das Molekulargewichtsmittel Mₙ (Zahlenmittel).

Die erfindungsgemässe Zusammensetzung enthält mindestens ein silanfunktionelles Polymer **P,** welches insbesondere Endgruppen der Formel (I) aufweist.

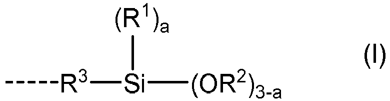

Dabei steht der Rest R¹ für eine Alkylgruppe mit 1 bis 8 C-Atomen, insbesondere für eine Methyl- oder für eine Ethylgruppe.
Der Rest R² steht für eine Acyl- oder Alkylgruppe mit 1 bis 5 C-Atomen, insbesondere für eine Methyl- oder für eine Ethyl- oder für eine Isopropylgruppe. Meist bevorzugt steht R² für eine Ethylgruppe.
Der Rest R³ steht für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoffatomen.

Der Index a steht für einen Wert von 0 oder 1 oder 2, insbesondere für einen Wert von 0.

Innerhalb einer Silangruppe der Formel (I) stehen R¹ und R² jeweils unabhängig voneinander für die beschriebenen Reste. So sind beispielsweise auch Verbindungen der Formel (I) möglich, welche Ethoxy-Dimethoxy-Alkylsilane (R² = Methyl, R² = Methyl, R² = Ethyl) darstellen.

In einer ersten Ausführungsform ist das silanfunktionelle Polymer **P** ein silanfunktionelles Polyurethanpolymer **P1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist.
Das Silan, welches mindestens eine gegenüber Isocyanatgruppen reaktive Gruppe aufweist, ist beispielsweise ein Mercaptosilan, ein Aminosilan oder ein Hydroxysilan, insbesondere ein Aminosilan.
Bevorzugt ist das Aminosilan ein Aminosilan **AS** der Formel (la), 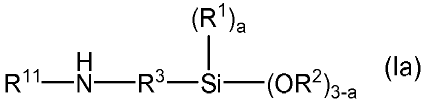 wobei R¹, R², R³ und a bereits vorhergehend beschrieben worden sind, und R¹¹ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (II) steht.

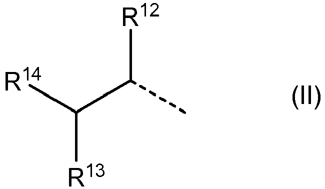

Dabei stehen die Reste R¹² und R¹³, unabhängig voneinander, für ein Wasserstoffatom oder für einen Rest aus der Gruppe umfassend -R¹⁵, -CN und -COOR¹⁵.
Der Rest R¹⁴ steht für ein Wasserstoffatom oder für einen Rest aus der Gruppe umfassend -CH₂-COOR¹⁵, -COOR¹⁵, CONHR¹⁵, -CON(R¹⁵)₂, -CN, -NO₂, -PO(OR¹⁵)₂, -SO₂R¹⁵ und -SO₂OR¹⁵.
Der Rest R¹⁵ steht für einen, gegebenenfalls mindestens ein Heteroatom enthaltenden, Kohlenwasserstoffrest mit 1 bis 20 C-Atomen.

Beispiele für geeignete Aminosilane **AS** sind primäre Aminosilane wie 3-Aminopropyltriethoxysilan, 3-Aminopropyldiethoxymethylsilan; sekundäre Aminosilane wie N-Butyl-3-aminopropyltriethoxysilan, N-Phenyl-3-aminopropyltriethoxysilan; die Produkte aus der Michael-artigen Addition von primären Aminosilanen wie 3-Aminopropyltriethoxysilan oder 3-Aminopropyldiethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Triethoxysilyl-propyl)-amino-bernsteinsäuredimethyl- und - diethylester; sowie Analoga der genannten Aminosilane mit Methoxy- oder Isopropoxygruppen anstelle der bevorzugten Ethoxygruppen am Silicium. Als Aminosilane **AS** besonders geeignet sind sekundäre Aminosilane, insbesondere Aminosilane **AS,** bei denen R⁴ in Formel (III) verschieden von H ist. Bevorzugt sind die Michael-artigen Addukte, insbesondere N-(3-Triethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.
Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.
Gegebenenfalls kann das Polyurethanpolymer unter Mitverwendung von Weichmachern hergestellt werden, wobei die verwendeten Weichmacher keine gegenüber Isocyanaten reaktive Gruppen enthalten.
Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol. Ebenfalls besonders geeignet sind so genannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole. Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.
Weiterhin geeignet sind Styrol-Acrylnitril gepfropfte Polyetherpolyole, wie sie beispielsweise unter dem Handelsnamen Lupranol® kommerziell erhältlich sind von der Firma BASF Polyurethanes GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.
Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.
Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® (früher Hycar®) CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche aliphatische, cycloaliphatische oder aromatische Polyisocyanate, insbesondere Diisocyanate, verwendet werden. Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Beispielsweise sind geeignete methoxysilanfunktionelle Polymere **P1** kommerziell erhältlich unter dem Handelsnamen Polymer ST50 von der Firma Hanse Chemie AG, Deutschland, sowie unter dem Handelsnamen Desmoseal®von der Firma Bayer MaterialScience AG, Deutschland. Bevorzugt werden ethoxysilanfunktionelle Polymere **P1** eingesetzt.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.
Als Isocyanatosilan **IS** geeignet sind Verbindungen der Formel (Ib). 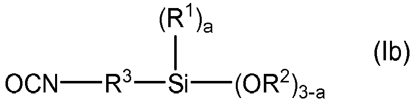 wobei R¹, R², R³ und a bereits vorhergehend beschrieben wurden. Beispiele für geeignete Isocyanatosilane **IS** der Formel (Ib) sind 3-Isocyanatopropyltriethoxysilan, 3-Isocyanatopropyldiethoxymethylsilan, und deren Analoga mit Methoxy- oder Isopropoxygruppen anstelle der Ethoxygruppen am Silicium.

Bevorzugt weist das Polymer als gegenüber Isocyanatgruppen reaktive funktionelle Endgruppen Hydroxylgruppen auf.
Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.
Andererseits eignen sich auch Hydroxylgruppen aufweisende, insbesondere Hydroxylgruppen terminierte, Polyurethanpolymere zur Umsetzung mit Isocyanatosilanen **IS** der Formel (Ib). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1. Gegebenenfalls kann das Polyurethanpolymer unter Mitverwendung von Weichmachern hergestellt werden, wobei die verwendeten Weichmacher keine gegenüber Isocyanaten reaktive Gruppen enthalten. Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.
Beispielsweise sind geeignete methoxysilanfunktionelle Polymere **P2** kommerziell erhältlich unter den Handelsnamen SPUR+® 1010LM, 1015LM und 1050MM von der Firma Momentive Performance Materials Inc., USA, sowie unter den Handelsnamen Geniosil® STP-E15, STP-10 und STP-E35 von der Firma Wacker Chemie AG, Deutschland.
Bevorzugt werden ethoxysilanfunktionelle Polymere **P2** eingesetzt.

In einer dritten Ausführungsform ist das silanfunktionelle Polymer **P** ein silanfunktionelles Polymer **P3,** welches erhältlich ist durch eine Hydrosilylierungsreaktion von Polymeren, mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung hiermit eingeschlossen ist.
Beispielsweise sind geeignete methoxysilanfunktionelle Polymere **P3** kommerziell erhältlich unter den Handelsnamen MS-Polymer® S203(H), S303(H), S227, S810, MA903 und S943, Silyl® SAX220, SAX350, SAX400 und SAX725, Silyl® SAT350 und SAT400, sowie XMAP® SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.
Bevorzugt werden ethoxysilanfunktionelle Polymere **P3** eingesetzt.

Weiterhin ist es auch möglich als silanfunktionelles Polymer **P** andere kommerziell erhältliche silanfunktionelle Polymere einzusetzen, beispielweise solche, wie sie unter dem Handelsnamen Tegopac® von Evonik Industries erhältlich sind, insbesondere sind dies Tegopac® Seal 100, Tegopac® Bond 150, Tegopac® Bond 250.

Üblicherweise ist das silanfunktionelle Polymer **P** in einer Menge von 10 bis 80 Gew.-%, bevorzugt in einer Menge von 15 bis 60 Gew.-%, bezogen auf die gesamte Zusammensetzung, vorhanden.

Weiterhin umfasst die erfindungsgemässe Zusammensetzung mindestens einen Katalysator für die Vernetzung silanfunktionellen Polymeren ausgewählt aus der Gruppe bestehend aus Organotitanat, Organozirkonat und Organoaluminat. Diese Katalysatoren weisen insbesondere Alkoxygruppen, Sulfonatgruppen, Carboxylgruppen, Dialkylphosphatgruppen, Dialkylpyrophosphatgruppen und -diketonatgruppen auf.

Besonders geeignete Organotitanate sind die Folgenden:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet.
Als Alkoholat-Liganden insbesondere geeignet sind Isobutoxy, n-Butoxy, Isopropoxy, Ethoxy und 2-Ethylhexoxy.
Ganz besonders geeignet sind Bis(Ethylacetoacetato)-diisobutoxy-titan(IV), Bis(Ethylacetoacetato)-diisopropoxy-titan(IV), Bis(Acetylacetonato)-diisopropoxy-titan(IV), Bis(Acetylacetonato)-diisobutoxy-titan(IV), Tris(oxyethyl)amin-isopropoxy-titan(IV), Bis[tris(oxyethyl)amin]-diisopropoxy-titan(IV), Bis(2-Ethylhexan-1,3-dioxy)-titan(IV), Tris[2-((2-Aminoethyl)amino)ethoxy]-ethoxy-titan(IV), Bis(Neopentyl(diallyl)oxy-diethoxy-titan(IV), Titan(IV)-tetrabutanolat, Tetra-(2-ethylhexyloxy)titanat, Tetra-(isopropoxy)titanat und Polybutyltitanat. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Du Pont / Dorf Ketal); Tytan PBT, TET, X85, TAA, ET, S2, S4 oder S6 (alle von TensoChema) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).
Besonders geeignete Organozirkonate sind die kommerziell erhältlichen Typen Ken-React® NZ® 38J, KZ® TPPJ, KZ® TPP, NZ® 01, 09, 12 38, 44 oder 97 (alle von Kenrich Petrochemicals) und Snapcure® 3020, 3030, 1020 (alle von Johnson Matthey & Brandenberger).

Ein besonders geeignetes Organoaluminat ist der kommerziell erhältliche Typ K-Kat 5218 (von King Industries).

Meist bevorzugt ist die erfindungsgemässe Zusammensetzung im Wesentlichen frei von Zinn oder organischen Zinnverbindungen, da diese einerseits aus ökologischen und toxikologischen Gründen nicht für jede Anwendung geeignet sind und weiterhin die Wirkung der vorliegenden Erfindung, insbesondere die Haftung auf Kunststoffen wie PVC, beeinträchtigen.
Insbesondere umfasst die Zusammensetzung ≤ 0.1 Gew.-%, insbesondere ≤ 0.06 Gew.-%, bevorzugt ≤ 0.01 Gew.-%, Zinn oder organische Zinnverbindungen. Meist bevorzugt enthält die Zusammensetzung kein Zinn und keine organischen Zinnverbindungen, wie sie typischerweise zur Aushärtung von Zusammensetzungen auf Basis von silanterminierten Polymeren eingesetzt werden.

Der Anteil des Katalysators beträgt vorzugsweise 0.1 bis 10 Gew.-%, insbesondere 0.2 bis 4 Gew.-%, bevorzugt 0.3 bis 3 Gew.-%, meist bevorzugt 0.5 bis 1.5 Gew.-%, der gesamten Zusammensetzung.

Weiterhin umfasst die erfindungsgemässe Zusammensetzung mindestens eine Base.
Als Base eignen sich insbesondere stickstoffhaltige Verbindungen. Insbesondere ist die Base ausgewählt ist aus Guanidin, Imidazol, Imidazolin, bicyclisches Amidin oder aus Derivaten dieser Verbindungen.
Bevorzugt sind Amine wie N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.

Der Anteil der Base beträgt vorzugsweise 0.05 bis 3 Gew.-%, insbesondere 0.1 bis 2 Gew.-%, bevorzugt 0.2 bis 1 Gew.-%, der gesamten Zusammensetzung.

Weiterhin umfasst die erfindungsgemässe Zusammensetzung mindestens ein Ethoxymercaptosilan. Insbesondere handelt es sich beim Ethoxymercaptosilan um eines der Formel (III).

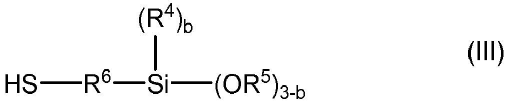

Dabei steht der Rest R⁴ für eine Alkylgruppe mit 1 bis 8 C-Atomen, insbesondere für eine Methylgruppe.
Der Rest R⁵ steht für eine Ethylgruppe.
Der Rest R⁶ steht für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.
b steht für einen Wert von 0, 1 oder 2.

Insbesondere ist das Ethoxymercaptosilan 3-Mercaptopropyltriethoxysilan oder 3-Mercaptopropyldiethoxymethylsilan.
In der erfindungsgemässen Zusammensetzung kann das Ethoxymercaptosilan auch in einer Form vorliegen, bei welcher die Mercaptogruppe blockiert vorliegt, beispielsweise als thiocarboxylatfunktionelles Silan. In diesem Fall wird die Mercaptogruppe unter Aushärtungsreaktionsbedingungen, typischerweise unter Einfluss von Wasser, freigesetzt.

Der Anteil des Organosilans beträgt vorzugsweise 0.1 bis 7 Gew.-%, insbesondere 0.2 bis 4 Gew.-%, bevorzugt 0.3 bis 1.5 Gew.-%, der gesamten Zusammensetzung.

Vorzugsweise weist die Zusammensetzung weiterhin einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
Es ist durchaus möglich und kann sogar von Vorteil sein, eine Mischung verschiedener Füllstoffe einzusetzen.
Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte Zusammensetzung.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltriethoxysilan, α-funktionelle Silane wie N-(Silylmethyl)-O-methyl-carbamate, insbesondere N-(Methyldiethoxysilylmethyl)-O-methyl-carbamat, (Methacryloxymethyl)silane, Ethoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.
Insbesondere enthält die erfindungsgemässe Zusammensetzung keine Phthalatweichmacher. Bevorzugte Weichmacher sind beispielweise hydrierte Phthalate.

Weiterhin können gegebenenfalls so genannte Reaktivverdünner eingesetzt werden, welche bei der Aushärtung der Zusammensetzung, insbesondere durch Reaktion mit den Silangruppen, in die Polymermatrix eingebunden werden.

Die erfindungsgemässe Zusammensetzung umfasst insbesondere keine Bestandteile, welche bei der Aushärtung Methanol abspalten. Derartige Bestandteile sind neben dem silanfunktionellen Polymer P gegebenenfalls vorhandene reaktive Bestandteile wie beispielsweise Haftvermittler, Trocknungsmittel, Reaktivverdünner, Vernetzer und andere vorhergehend beschriebene Bestandteile.

Bestandteile, welche bei der Aushärtung Methanol abspalten, sind typischerweise Methoxygruppen aufweisende, silanfunktionelle Verbindungen. Insbesondere umfasst also die erfindungsgemässe Zusammensetzung keine silanfunktionellen Verbindungen, welche Methoxysilangruppen aufweisen. Bevorzugt weisen sämtliche in der Zusammensetzung vorhandene silanfunktionelle Verbindungen Endgruppen der Formel (I) auf, wobei die Reste R¹, R² und R³ sowie der Index a bereits vorhergehen beschreiben worden sind. Meist bevorzugt sind alle in der Zusammensetzung enthaltenen hydrolysierbaren Silangruppen Ethoxysilangruppen, insbesondere Triethoxysilangruppen.
In einer meist bevorzugten Ausführungsform ist das silanfunktionelle Polymer **P** ein silanfuntionelles Polymer **P1** und weist als Silangruppen nur Triethoxysilangruppen auf. Weiterhin weisen gegebenenfalls vorhandene Silangruppen enthaltende Additive als Silangruppen nur Triethoxysilangruppen oder Alkyldiethoxysilangruppen, insbesondere Methyl- oder Ethyldiethoxysilangruppen, bevorzugt Triethoxysilangruppen, auf.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Weiterhin betrifft die vorliegende Erfindung die Verwendung einer Zusammensetzung, wie sie vorhergehend beschreiben worden ist, als Klebstoff, Dichtstoff oder Beschichtung, wobei die Zusammensetzung primerlos angewendet werden kann. Insbesondere betrifft die vorliegende Erfindung die Verwendung der Zusammensetzung zum Verkleben, Abdichten oder Beschichten von Kunststoffen, bevorzugt von PVC.
Weiterhin eignet sich die erfindungsgemässe Zusammensetzung auch zum Verkleben, Abdichten oder Beschichten von Beton, Mörtel, Backstein, Ziegel, Gips, Naturstein wie Granit oder Marmor, Glas, Glaskeramik, Metall oder Metalllegierung, Holz, Kunststoff und Lack.
Besonders geeignet ist die erfindungsgemässe Zusammensetzung für Anwendungen im Bereich Marine, insbesondere als Kleb- und Dichtstoff im Boots- und Schiffsbau.

Weiterhin betrifft die Erfindung eine gehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels. Insbesondere handelt es sich bei den Artikeln auch um Boote oder Schiffe oder um Teile davon.

Weiterhin betrifft die vorliegende Erfindung die Verwendung eines Ethoxymercaptosilans, wie es vorhergehend beschrieben worden ist, als Haftvermittler in Zusammensetzungen auf Basis von silanfunktionellen Polymeren in Kombination mit einem Katalysator für die Vernetzung von silanfunktionellen Polymeren, ausgewählt aus der Gruppe bestehend aus einem Organotitanat, Organozirconat und Organoaluminat zur Verbesserung der primerlosen Haftung dieser Zusammensetzungen auf Kunststoffen, insbesondere auf PVC.
Vorzugsweise erfolgt die Verwendung weiterhin in Kombination mit einer Base, wie sie vorhergehend beschrieben worden ist.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Der **Elastizitätsmodul** (E-Modul) im Dehnungsbereich gemäss Tabelle 1 wurden nach DIN EN 53504 (Zuggeschwindigkeit: 200 mm/min) an während 7 Tagen bei 23°C und 50 % relativer Luftfeuchtigkeit ausgehärteten Filmen mit einer Schichtdicke von 2 mm bestimmt.
Die **Shore A-Härte** wurde bestimmt nach DIN 53505, an während 7 Tagen bei 23°C und 50 % relativer Luftfeuchtigkeit ausgehärteten Probekörpern mit einer Schichtdicke von 6 mm.
Für die Bestimmung der **Auspresskraft** wurden die Zusammensetzungen in innenlackierte Aluminiumkartuschen gefüllt und während der in Tabelle 1 angegebenen Zeit und Temperatur gelagert. Nach einer Konditionierung von 12 Stunden bei 23°C wurden die Kartuschen geöffnet und mittels Auspressgerät ausgepresst. Dafür wurde eine Düse mit 3 mm Innendurchmesser auf die Kartusche aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.
Die **Standfestigkeit** wurde durch Applikation eines zylinderförmigen Klebstoffkörpers mit einem Durchmesser von etwa 2 cm und einer Länge von etwa 4 cm aus einer Kartusche bei 23°C und 50% relativer Luftfeuchtigkeit an eine senkrecht stehende Kartonfläche bestimmt. Absenkungen des freien Endes des Klebstoffkörpers von weniger als etwa 1 cm an einem Tag werden als gut eingestuft, grössere Absenkungen als schlecht.
Für die Bestimmung der **Haftung** wurden Klebstoffraupen der hergestellten Zusammensetzungen auf die entsprechenden Substrate appliziert, unterschiedlichen Lagerungsbedingungen ausgesetzt und danach bei Raumtemperatur (23°C) und 50% relativer Luftfeuchtigkeit mittels "Raupentest" geprüft. Hierbei wird an einem Ende der Raupe knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Platzieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch)

Testresultate mit Kohäsionsbruchwerten von weniger als 75% gelten als ungenügend.
Die Lagerungsbedingungen waren 7 Tage 23° und 50% relative Luftfeuchtigkeit (bei Haftung in Tabelle 1: erste Zahl), zusätzlich dazu 7 Tage im Wasserbad bei 20°C (zweite Zahl), zusätzlich dazu 1 Tag bei 80°C und 50% relative Luftfeuchtigkeit (dritte Zahl) und zusätzlich dazu 7 Tage Kataplasmalagerung bei 70°C und 100% relativer Luftfeuchtigkeit (vierte Zahl).

### Herstellung des silanfunktionellen Polyurethanpolymers mit Ethoxv-Endgruppen P-EtO

Unter Stickstoffatmosphäre wurden 700 g Polyol Acclaim® 12200 (Bayer MaterialScience AG, Deutschland; low monol Polyoxypropylendiol; OH-Zahl 11.0 mg KOH/g; Wassergehalt ca. 0.02 Gew.-%), 32.1 g Isophorondiisocyanat (Vestanat® IPDI, Evonik Degussa GmbH, Deutschland), 85.4 g 2,2,4-Trimethyl-1,3-pentandioldiisobutyrat (Eastman TXIB™; Eastman Chemical Company, USA) und 0.4 g Tyzor® IBAY (von DuPont, USA) unter stetigem Rühren auf 90°C aufgeheizt und bei dieser Temperatur belassen. Nach einer Stunde Reaktionszeit wurde mittels Titration ein freier Gehalt an Isocyanatgruppen von 0.7 Gew.-% erreicht. Anschliessend wurden 0.14 mol (entspricht einer stöchiometrischen Umsetzung der NCO-Gruppen mit Silan) reaktives Silan **(*Int-EtO*)** beigefügt und für weitere 2 bis 3 Stunden bei 90°C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23°C) abgekühlt und unter Ausschluss von Feuchtigkeit aufbewahrt (theoretischer Polymergehalt = 90%).

Das reaktive Silan ***Int-EtO*** (N-(3-Triethoxysilyl-propyl)-amino-bernsteinsäurediethylester) wurde wie folgt hergestellt: 100 g 3-Aminopropyltriethoxysilan (Dynasylan® AMEO von Evonik Degussa GmbH, Deutschland) wurden vorgelegt. Unter gutem Rühren wurden bei Raumtemperatur langsam 77.8 g Maleinsäure-diethylester (Fluka Chemie GmbH, Schweiz) zugegeben und die Mischung während 12 Stunden bei 60°C gerührt.

### Herstellung des Thixotropierungsmittels TM

In einem Vakuummischer wurden 1000 g 1,2-Cyclohexandicarbonsäurediisononylester (DINCH, Hexannoll® DINCH, BASF SE, Deutschland) und 160 g 4,4'-Diphenylmethandiisocyanat (Desmodur® 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel ***TM*** enthält 20 Gew.-% Thixotropierungsmittel in 80 Gew.-% DINCH.

### Herstellung der Basisklebstoffformulierung

In einem Vakuummischer wurden 24 Gewichtsteile silanfunktionelles Polymer ***P-EtO,*** 7 Gewichtsteile DINCH, 17 Gewichtsteile Thixotropierungsmittel ***TM*** und 1 Gewichtsteil Tetraethoxysilan (Dynasylan® A von Evonik Degussa GmbH, Deutschland) während 5 Minuten gut vermischt. Anschliessend wurden 49 Gewichtsteile getrocknete, gefällte Kreide (Socal® U1S2, Solvay SA, Belgien) während 15 Minuten bei 60°C eingeknetet. Bei ausgeschalteter Heizung wurden anschliessend 0.5 Gewichtsteile Katalysator und 0.5 Gewichtsteile DBU unter Vakuum während 10 Minuten zu einer homogenen Paste verarbeitet. Zu dieser Basisformulierung wurden zusammen mit dem Katalysator und dem DBU die jeweiligen Organosilane in entsprechenden Mengen gemäss Tabelle 1 zugegeben.
Die hergestellten Klebstoffe wurden dann in innenlackierte Aluminium-Spreizkolbenkartuschen abgefüllt.

### Eingesetzte Organosilane

| | |
|---|---|
| Silquest® A-1891 | 3-Mercaptopropyltriethoxysilan (Momentive) |
| Silquest® VX-225 | Aminofunktionelles Oligosiloxan (Momentive) |
| Geniosil® GF 94 | N-(2-Aminoethyl)-3-aminopropyltriethoxysilan (Wacker) |
| Dynasylan® MTMO | 3-Mercaptopropyltrimethoxysilan (Evonik) |
| Dynasylan® AMEO | 3-Aminopropyltriethoxysilan (Evonik) |

Bei den Beispielen 4 bis 9 handelt es sich um nicht-anspruchsgemässe Beispiele.

**Tabelle 1 Klebstoffzusammensetzungen mit unterschiedlichen Organosilanen und Resultate;**

| | ***1*** | ***2*** | ***3*** | ***4*** | ***5*** | ***6*** | ***7*** | ***8*** | ***9*** |
|---|---|---|---|---|---|---|---|---|---|
| Basisklebstoffformulierung (Gew.-%) | 99 | 99.2 | 99.4 | 99 | 99 | 99 | 99 | 99 | 99 |
| Organosilan | 1 Gew.-% A-1891 | 0.8 Gew.-% A-1891 | 0.6 Gew.-% A-1891 | 1 Gew.-% AMEO | 1 Gew.-% GF 94 | 1 Gew.-% VX-225 | 1 Gew.-% MTMO | 1 Gew.-% A-1891 | 1 Gew.-% MTMO |
| Katalysator | Tyzor® IBAY | Tyzor® IBAY | Tyzor® IBAY | Tyzor® IBAY | Tyzor® IBAY | Tyzor® IBAY | Tyzor® IBAY | DBTDL ^{a)} | Tyzor® |
| E-Modul 0-5% [MPa] | 1.4 | 1.5 | 1.4 | 1.2 | 1.2 | 0.5 | 1.0 | 0.9 | 1.1 |
| E-Modul 0-25% [MPa] | 0.8 | 0.8 | 0.8 | 0.8 | 0.9 | 0.4 | 0.8 | 0.7 | 0.7 |
| E-Modul 0-50% [MPa] | 0.6 | 0.6 | 0.6 | 0.7 | 0.8 | 0.4 | 0.7 | 0.6 | 0.6 |
| E-Modul 0-100% [MPa] | 0.5 | 0.5 | 0.5 | 0.7 | 0.7 | 0.3 | 0.5 | 0.5 | 0.4 |
| Standfestigkeit | gut | gut | gut | schlecht | schlecht | schlecht | schlecht | schlecht | schlecht |
| APK (3 mm) [N] | 1017 | 1240 | 1379 | 673 | 1455 | 1275 | 1275 | 717 | 1106 |
| Shore A | 31 | 30 | 31 | 33 | 34 | 19 | 32 | 28 | 29 |
| Haftung auf PVC | 1 1 1 1 | 1 1 1 1 | 1 1 1 1 | 4 4 4 4 | 4 4 4 4 | 4 4 4 4 | 3 2 1 1 | 4 4 2 1 | 4 4 4 4 |
| Haftung auf AIMg3 | 1 1 1 1 | n.b. | n.b. | n.b. | n.b. | n.b. | n.b. | n.b. | n.b. |
| Haftung auf Stahl | 1 1 1 1 | n.b. | n.b. | n.b. | n.b. | n.b. | n.b. | n.b. | n.b. |
| Haftung auf glassfaserverstärktem Kunststoff (ungesättigter Polyester) | 1 1 1 1 | n.b. | n.b. | n.b. | n.b. | n.b. | n.b. | n.b. | n.b. |

| | | | | | | | | | |
|---|---|---|---|---|---|---|---|---|---|
| ^{a)} DBTDL: 10%-ige Lösung von Dibutylzinndilaurat in Diisodecylphthalat; n.b.: nicht bestimmt. | | | | | | | | | |

## Patentansprüche

1. Zusammensetzung umfassend
- mindestens ein silanfunktionelles Polymer **P;**
- mindestens einen Katalysator für die Vernetzung von silanfunktionellen Polymeren, ausgewählt aus der Gruppe bestehend aus Organotitanat, Organozirconat und Organoaluminat;
- mindestens eine Base; sowie
- mindestens ein Ethoxymercaptosilan.

2. Zusammensetzung nach Anspruch 1, **dadurch gekennzeichnet, dass** das silanfunktionelle Polymer **P** keine Methoxysilangruppen aufweist.

3. Zusammensetzung nach einem der Ansprüche 1 oder 2, **dadurch gekennzeichnet, dass** das silanfunktionelle Polymer **P** ein ethoxysilanfunktionelles Polymer ist.

4. Zusammensetzung nach einem der vorhergehenden Ansprüche, **dadurch gekennzeichnet, dass** die Zusammensetzung keine Bestandteile enthält, welche bei der Aushärtung mit Wasser Methanol abspalten.

5. Zusammensetzung nach einem der vorhergehenden Ansprüche, **dadurch gekennzeichnet, dass** die Zusammensetzung keine Phthalatweichmacher enthält.

6. Zusammensetzung nach einem der vorhergehenden Ansprüche, **dadurch gekennzeichnet, dass** die Base ausgewählt ist aus Guanidin, Imidazol, Imidazolin, bicyclisches Amidin oder aus Derivaten dieser Verbindungen.

7. Zusammensetzung nach einem der vorhergehenden Ansprüche, **dadurch gekennzeichnet, dass** die Base 1,8-Diazabicyclo[5.4.0]undec-7-en ist.

8. Zusammensetzung nach einem der vorhergehenden Ansprüche, **dadurch gekennzeichnet, dass** das Ethoxymercaptosilan 3-Mercaptopropyltriethoxysilan ist.

9. Zusammensetzung nach einem der vorhergehenden Ansprüche, **dadurch gekennzeichnet, dass** der Anteil an Ethoxymercaptosilan 0.1 bis 7 Gew.-% der gesamten Zusammensetzung beträgt.

10. Zusammensetzung nach einem der vorhergehenden Ansprüche, **dadurch gekennzeichnet, dass** sie zusätzlich Tetraethoxysilan umfasst.

11. Verwendung einer Zusammensetzung nach einem der Ansprüche 1 bis 10 als Klebstoff, Dichtstoff oder Beschichtung, wobei die Zusammensetzung primerlos angewendet werden kann.

12. Verwendung nach Anspruch 11 zum Verkleben, Abdichten oder Beschichten von Kunststoffen.

13. Verwendung eines Ethoxymercaptosilans als Haftvermittler in Zusammensetzungen auf Basis von silanfunktionellen Polymeren in Kombination mit einem Katalysator für die Vernetzung von silanfuntionellen Polymeren, ausgewählt aus der Gruppe bestehend aus Organotitanat, Organozirconat und Organoaluminat, zur Verbesserung der primerlosen Haftung dieser Zusammensetzungen auf Kunststoffen.

## Claims

1. A composition comprising
- at least one silane-functional polymer **P;**
- at least one catalyst for the crosslinking of silane-functional polymers, selected from the group consisting of organotitanate, organozirconate and organoaluminate;
- at least one base; and
- at least one ethoxy mercaptosilane.

2. The composition according to claim 1, **characterized in that** the silane-functional polymer **P** has no methoxysilane groups.

3. The composition according to any one of claims 1 or 2, **characterized in that** the silane-functional polymer **P** is an ethoxysilane-functional polymer.

4. The composition according to any one of the preceding claims, **characterized in that** the composition contains no constituents that release methanol during curing with water.

5. The composition according to any one of the preceding claims, **characterized in that** the composition contains no phthalate plasticisers.

6. The composition according to any one of the preceding claims, **characterized in that** the base is selected from guanidine, imidazole, imidazoline, bicyclic amidine or derivatives of these compounds.

7. The composition according to any one of the preceding claims, **characterized in that** the base is 1,8-diazabicyclo[5.4.0]undec-7-ene.

8. The composition according to any one of the preceding claims, **characterized in that** the ethoxy mercaptosilane is 3-mercaptopropyl triethoxysilane.

9. The composition according to any one of the preceding claims, **characterized in that** the fraction of ethoxy mercaptosilane is 0.1 to 7 wt% of the composition as a whole.

10. The composition according to any one of the preceding claims, **characterized in that** it additionally comprises tetraethoxysilane.

11. The use of a composition according to any one of claims 1 to 10 as an adhesive, sealant or coating, wherein the composition can be applied without a primer.

12. The use according to claim 11 for the adhesion, sealing or coating of plastics.

13. The use of an ethoxy mercaptosilane as an adhesion promoter in compositions based on silane-functional polymers in combination with a catalyst for the crosslinking of silane-functional polymers, selected from the group consisting of organotitanate, organozirconate and organoaluminate, for improving the primerless adhesion of said compositions to plastics.

## Revendications

1. Composition comprenant :
- au moins un polymère à fonction silane **P** ;
- au moins un catalyseur pour la réticulation de polymères à fonction silane, choisi dans le groupe constitué par l'organotitanate, l'organozirconate et l'organoaluminate ;
- au moins une base ; ainsi que
- au moins un éthoxymercaptosilane.

2. Composition selon la revendication 1, **caractérisée en ce que** le polymère à fonction silane **P** ne comprend pas de groupes méthoxysilane.

3. Composition selon l'une quelconque des revendications 1 ou 2, **caractérisée en ce que** le polymère à fonction silane **P** est un polymère à fonction éthoxysilane.

4. Composition selon l'une quelconque des revendications précédentes, **caractérisée en ce que** la composition ne contient pas de constituants qui libèrent du méthanol lors du durcissement avec de l'eau.

5. Composition selon l'une quelconque des revendications précédentes, **caractérisée en ce que** la composition ne contient pas de plastifiant phtalate.

6. Composition selon l'une quelconque des revendications précédentes, **caractérisée en ce que** la base est choisie parmi la guanidine, l'imidazole, l'imidazoline, l'amidine bicyclique ou les dérivés de ces composés.

7. Composition selon l'une quelconque des revendications précédentes, **caractérisée en ce que** la base est le 1,8-diazabicyclo[5.4.0]undéc-7-ène.

8. Composition selon l'une quelconque des revendications précédentes, **caractérisée en ce que** l'éthoxymercaptosilane est le 3-mercaptopropyltriéthoxysilane.

9. Composition selon l'une quelconque des revendications précédentes, **caractérisée en ce que** la proportion d'éthoxymercaptosilane est de 0,1 à 7 % en poids de la composition totale.

10. Composition selon l'une quelconque des revendications précédentes, **caractérisée en ce qu'**elle comprend en outre du tétraéthoxysilane.

11. Utilisation d'une composition selon l'une quelconque des revendications 1 à 10 en tant qu'adhésif, agent d'étanchéité ou revêtement, la composition pouvant être appliquée sans agent primaire.

12. Utilisation selon la revendication 11 pour le collage, l'étanchéification ou le revêtement de matières plastiques.

13. Utilisation d'un éthoxymercaptosilane en tant que promoteur d'adhésion dans des compositions à base de polymères à fonction silane en combinaison avec un catalyseur pour la réticulation de polymères à fonction silane, choisi dans le groupe constitué par l'organotitanate, l'organozirconate et l'organoaluminate, pour améliorer l'adhésion sans agent primaire de ces compositions sur des matières plastiques.
